# EUROPEAN PATENT SPECIFICATION

(11) **EP 2 523 065 B1**
(45) Date of publication and mention of the grant of the patent: **09.09.2015**
(21) Application number: 11165492.7
(22) Date of filing: 10.05.2011
(51) Int. Cl.: G05D 23/02, E03C 1/04, F16K 1/12

(54) **Regulation valve and method for calibrating such a regulation valve**
Regulierklappe und Verfahren zur Kalibrierung der Regulierklappe
Soupape de régulation et procédé d'étalonnage d'une telle soupape de régulation

(43) Date of publication of application: 14.11.2012
(73) Proprietor: Honeywell Technologies Sarl, 1180 Rolle (CH)
(72) Inventor: Klepsa, Martin, 61200 Brno (CZ); Grumpe, Volker, 74842 Billigheim (DE); Weidner, Kurt, 73434 Aalen (DE); Fallmann, Emil, 74850 Schefflenz (Ober) (DE)
(74) Representative: Sturm, Christoph

(56) References cited:
- WO-A1-2006/076732
- US-A1- 2007 194 131
- US-A1- 2007 194 141

## Description

The invention relates to a method for calibrating a regulation valve.

In drinking water circulation systems it is necessary to provide a defined temperature of the drinking water circulated by the drinking water circulation system. A drinking water regulation valve used in such a drinking water circulation system needs to provide an accurate regulation of the flow rate of the drinking water through the drinking water regulation valve depending on the temperature of the drinking water, especially at relative high temperatures of the liquid medium at which an accurate relative low flow rate of the liquid medium through the control valve has to be provided. Similar requirements have to be fulfilled by regulation valves for circulation systems of other liquid mediums.

WO 2006/076732 A1 discloses a regulation valve for a liquid medium like water, especially for drinking water, comprising: a valve housing providing a valve inlet chamber and a valve outlet chamber; a valve insert being positioned within said valve housing, said valve insert comprising a valve body, a valve plunger and a first spring element being positioned between the valve body and the valve plunger, whereby said valve body provides a valve seat for said valve plunger and whereby said first spring element provides a first spring force which tends to lift up said valve plunger from said valve seat; a thermo element being positioned directly in the flow of the liquid medium and carrying said valve plunger, said thermo element provides a thermo element force acting on the valve plunger depending on the temperature of the liquid medium within the valve housing, whereby said thermo element force provided by said thermo element is acting against the first spring force provided by said first spring element and thereby tends to press said valve plunger against said valve seat.

Against this background, a novel method for calibrating such a regulation valve are provided which provide an accurate regulation of the flow rate of the liquid medium through the regulation valve depending on the temperature of the liquid medium, especially at relative high temperatures of the liquid medium at which an accurate relative low flow rate of the liquid medium through the control valve has to be provided.

The method for calibrating a regulation valve comprises the following steps: positioning the regulation valve to be calibrated in a bath of a liquid medium having a defined calibration temperature in such a way that the thermo element of the regulation valve to be calibrated is positioned directly in said liquid medium of said bath; providing a relative movement between said valve body and said valve plunger of the regulation valve to be calibrated while the same in positioned in said bath in such a way that the valve plunger contacts the valve seat of said valve body.

Preferred developments of the invention are provided by the dependent claims and the description which follows. Exemplary embodiments are explained in more detail on the basis of the drawing, in which:
- Figure 1: shows a cross sectional view through a regulation valve;
- Figures 2a and 2b: show a detail of the regulation valve of Figure 1;
- Figures 3a and 3b: show an alternative for the detail according to Figures 2a and 2b;
- Figure 4: shows another detail of the regulation valve of Figure 1;
- Figure 5: shows a detail of Figure 4;
- Figure 6: shows a detail of Figure 5;
- Figure 7: shows a detail of Figure 6;
- Figure 8: shows an alternative for the detail according to Figure 7;
- Figure 9: shows another detail of the regulation valve of Figure 1;
- Figure 10: shows another detail of the regulation valve of Figure 9;
- Figure 11: shows an alternative for the detail according to Figure 10;
- Figures 12a to 12c: show details of a first embodiment of a method for calibrating a regulation valve; and
- Figures 13a to 13c: show details of a second embodiment of the method for calibrating a regulation valve.

The invention relates to a regulation valve for a liquid medium like water, especially to a drinking water regulation valve for a drinking water circulation system.

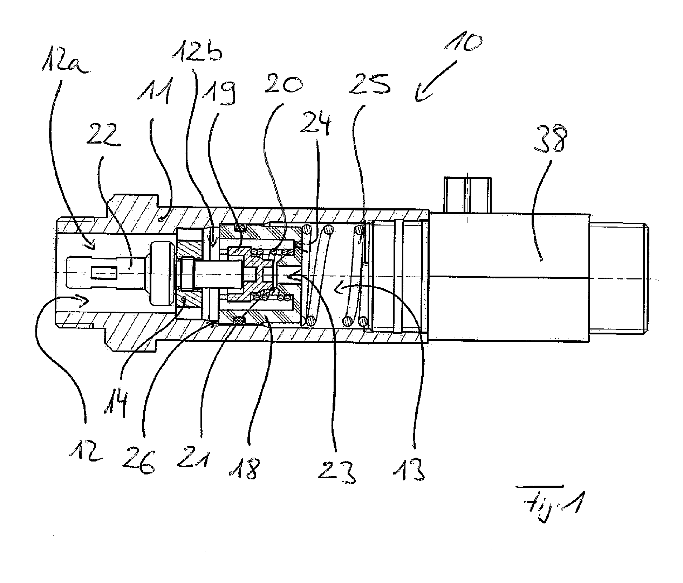

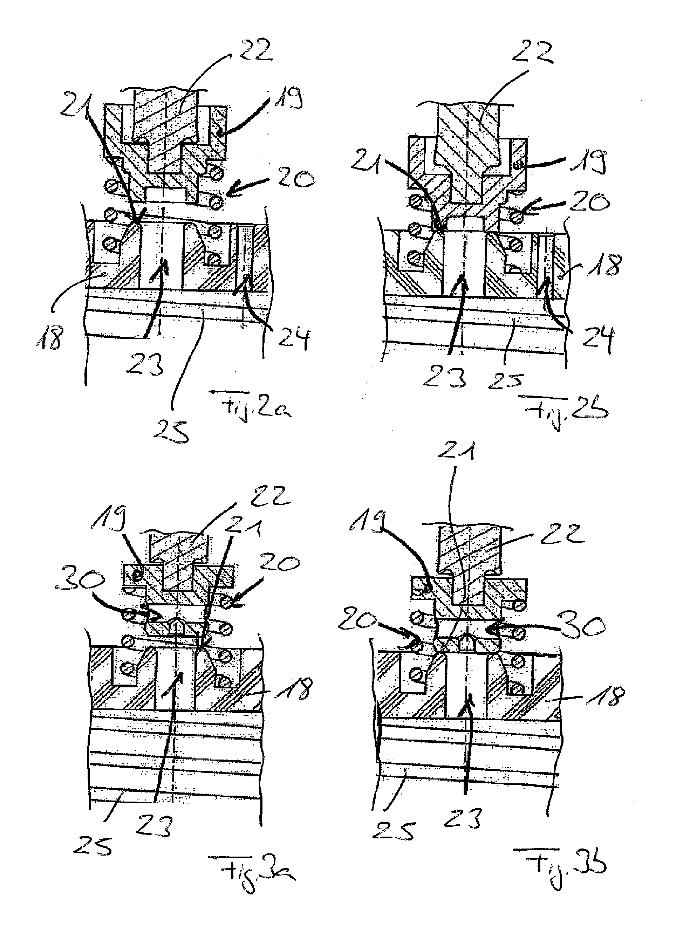

Figure 1 shows a cross sectional view of a regulation valve 10, whereby Figures 2a, 2b and 4-10 each show details of said regulation valve 10.

The regulation valve10 comprises a valve housing 11. The valve housing 11 provides a valve inlet chamber 12 for the liquid medium and a valve outlet chamber 13 for the liquid medium.

The regulation valve 10 comprises a valve insert being positioned within said valve housing 11. Said valve insert comprising a valve body 18, a valve plunger 19 and a first spring element20 being positioned between the valve body 18 and the valve plunger, 19 and acting on the valve body 18 and the valve plunger 19.

Said valve body 18 separates the second inlet chamber 12 from the outlet chamber 13 and provides a valve seat 21 for said valve plunger 19. Said first spring element 20 provides a first spring force which tends to lift up said valve plunger 19 from said valve seat 21.

The regulation valve 10 further comprises a thermo element 22 being positioned directly in the flow of the liquid medium, namely in Figure 1 directly within the valve inlet chamber 12 of the regulation valve 10.

Said thermo element 22 provides a thermo element force depending on the temperature of the liquid medium within the valve housing 11, namely in Figure 1 within the valve inlet chamber 12. Said thermo element 22 is carrying said valve plunger 19 and is acting on the valve plunger 19. Said thermo element force provided by said thermo element 22 is acting against the first spring force provided by said first spring element 20 and thereby tends to press said valve plunger 19 against said valve 21.

Said thermo element force provided by said thermo element 22 increases when the temperature of the liquid medium within the valve housing 11, namely in Figure 1 within the valve inlet chamber 12, increases.

Said thermo element 22 acts together with the valve plunger 19 and the first spring element 20 in such a way that at relative low temperatures of the liquid medium within the valve housing 11 the valve plunger 19 is lifted up from the valve seat 21 by the first spring force being larger than the thermo element force thereby providing a relative high flow rate of the liquid medium through the control valve 10.

At relative high temperatures of the liquid medium within the valve housing 11 the valve plunger 19 is pressed against the valve seat 21 by the thermo element force being larger than the first spring force thereby providing a relative low flow rate of the liquid medium through the control valve 10. Said relative low flow rate is also often called minimum flow rate.

Said valve body 10 provides at least one relative large opening 23 being surrounded by the valve seat 21 which is opened when said valve plunger 19 is lifted up from said valve seat 21 at relative low temperatures of the liquid medium thereby providing the relative high flow rate. The or each relative large opening 23 is at least partially closed when said valve plunger 19 is pressed against said valve seat 21 at relative high temperatures of the liquid medium thereby providing the relative low flow rate.

In Figure 1 (see especially 2a, 2b), the or each relative large opening 23 of the valve body 18 is completely closed when said valve plunger 19 is pressed against said valve seat 21, whereby the relative low flow rate or minimum flow rate through the control rate is provided by at least one additional, relative small opening 24 within the valve body 18. The or each additional, relative small opening 24 within the valve body 18 is not surrounded by said valve seat 21 and is also opened when said valve plunger 19 is pressed against said valve seat 21 thereby providing a highly accurate relative low flow rate. The or each additional, relative small opening 24 can be manufactured very precisely and the flow through the same does not depend on any other tolerances of the regulation valve 10.

The regulation valve 10 further comprises a second spring element 25 acting together with to the valve body 18. Said second spring element 25 provides a second spring force which tends press the valve body 18 in the direction of a stroke 26 provided by the said valve housing 11. At relative high temperatures of the liquid medium when said valve plunger 19 is pressed against said valve seat 21 the thermo element force the thermo element force tens to lift up the valve body 18 from said stroke 26 without changing the relative low flow rate or minimum flow rate through the regulation valve 10.

At relative low temperatures of the liquid medium, the control valve 10 of Figure 1 provides a relative high flow rate of the liquid medium through the control valve 10, namely through the or each relative large opening 23 of the valve body 18. At relative high temperatures of the liquid medium, the control valve 10 of Figure 1 provides a relative low flow rate of the liquid medium through the control valve 10, namely through the or each relative small opening 24 of the valve body 18, whereby the or each relative large opening 23 of the valve body 18 is completely closed at relative high temperatures of the liquid medium.

The thermo element 22 is positioned directly in the flow of the liquid medium. This allows a quick and accurate reaction on a changing temperature of the liquid medium and therefore an accurate regulation of the flow rate of the liquid medium through the regulation valve 10 depending on the temperature of the liquid medium.

In the alternative of Figures 3a, 3b, a different valve plunger 19 and a different valve body 18 are used. The valve body 18 of Figures 3a and 3b comprises only the or each opening 23 known from Figures 1, 2a and 2b.

In Figures 3a and 3b, the or each relative large opening 23 is partially closed when said valve plunger 19 is pressed against said valve seat 21, whereby the relative low flow rate is provided by at least one opening 30 within the valve plunger 19 being in connection with the or each relative large opening 23 of the valve body 18 when the valve plunger 19 is pressed against said valve seat 21. The or each opening 30 is smaller than the or each opening 23 thereby providing the relative low flow rate of the liquid medium through the control valve.

The regulation valve 10 further comprises a mounting support 14 carrying said thermo element 22, whereby a subassembly comprising said mounting support 14, said thermo element 22 and said valve plunger 19 is mounted within an opening 15 of said valve housing 11 by a pressed connection between said mounting support 14 and said valve housing 11. The mounting support 14 separates the valve inlet chamber 12 into two sub-chambers, namely into a first inlet sub-chamber 12a and a second inlet sub-chamber 12b. The mounting support 14 allows a precise pre-assembling of the subassembly comprising said mounting support 14, said thermo element 22 and said valve plunger 19 outside the valve housing 11.

The subassembly comprising said mounting support 14, said thermo element 22 and said valve plunger 19 can be easily installed into the valve housing 11 by simply pressing the subassembly into the opening 15 of the valve housing 11 through said mounting support 14 providing said pressed connection between said mounting support 14 and said valve housing 11.

Said mounting support 14 is provided by a disc-like or plate like element having a central opening 16 carrying a section of said thermo element 22, said disc-like or plate like element further having an outer surface 17 such that at least one first section 27 of said outer surface 17 provides said pressed connection between said mounting support 14 and said valve housing 11 and that at least one second section 28 of said outer surface 17 allows a flow of said liquid medium across said mounting support 14.

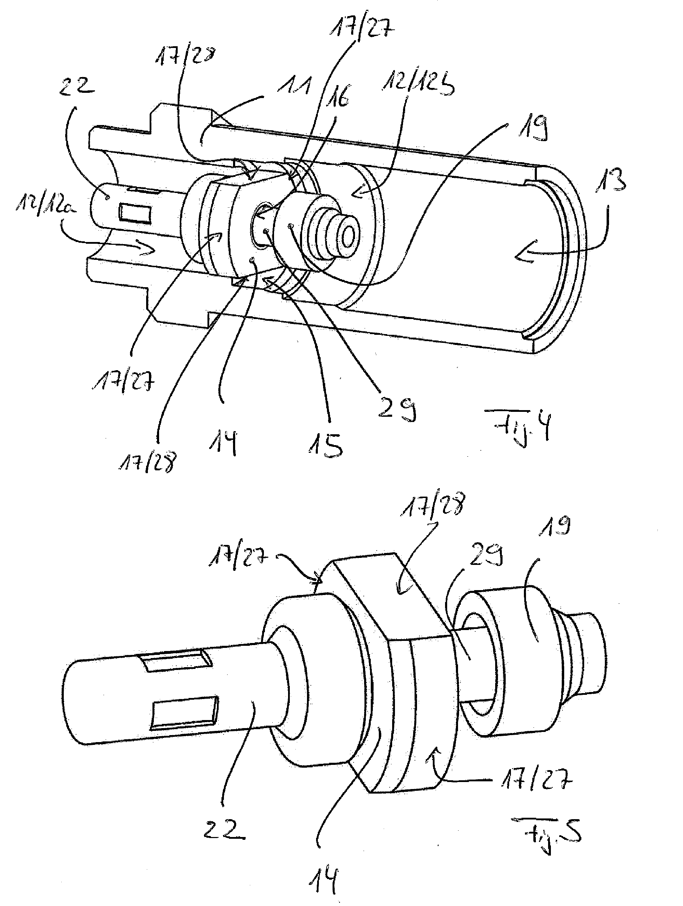

The mounting support 14 shown in Figures 4 to 7 comprises two opposite first surface sections 27 providing said pressed connection and two opposite second surface sections 28 allows the flow of said liquid medium across said mounting support 14 from inlet sub-chamber 12a and a second inlet sub-chamber 12b.

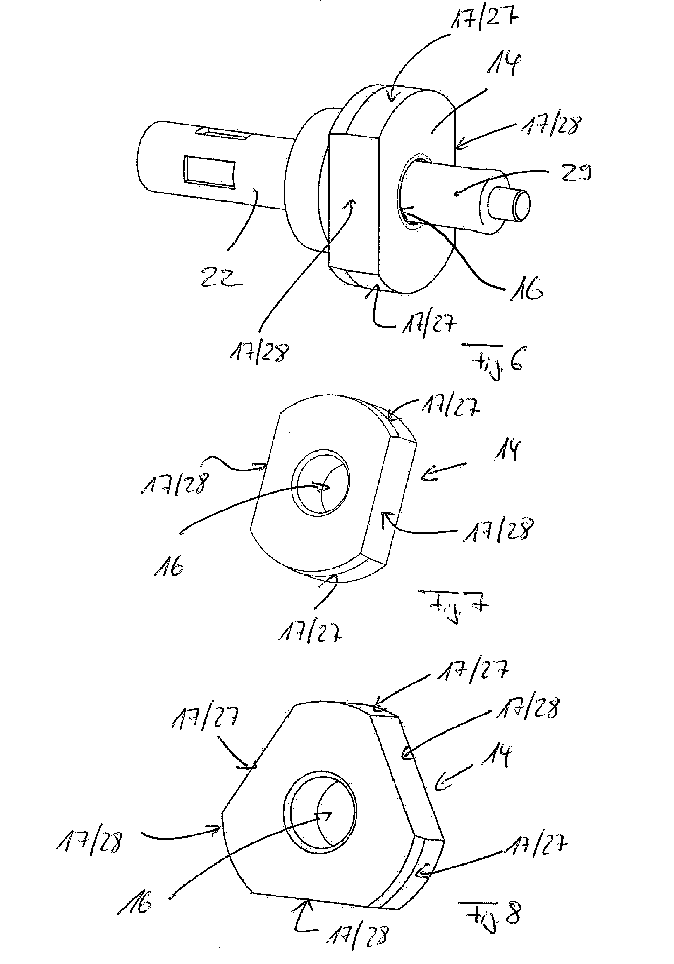

The alternative mounting support 14 shown in Figure 8 comprises three first surface sections 27 providing said pressed connection and three second surface sections 28 allows the flow of said liquid medium across said mounting support 14 from inlet sub-chamber 12a and a second inlet sub-chamber 12b.

The number and/or shape of the second surface sections 28 provided by cut-outs depends on the desired flow rate of said liquid medium across said mounting support 14 from inlet sub-chamber 12a and a second inlet sub-chamber 12b.

The number and/or shape of the second surface sections 28 depend also on the friction force needed between the mounting support 14 and the valve housing 11 when pressing the subassembly into the opening 15 of the valve housing 11 through said mounting support 14.

As shown in Figures 4 to 6, the central opening 16 of said mounting support 14 carries a section of said thermo element 22. Another section of said thermo element 22 carries said valve plunger 19. A jacket 29 preferably made from a rubber material surrounds another section of said thermo element 22 extending between said mounting support 14 and said valve plunger 19.

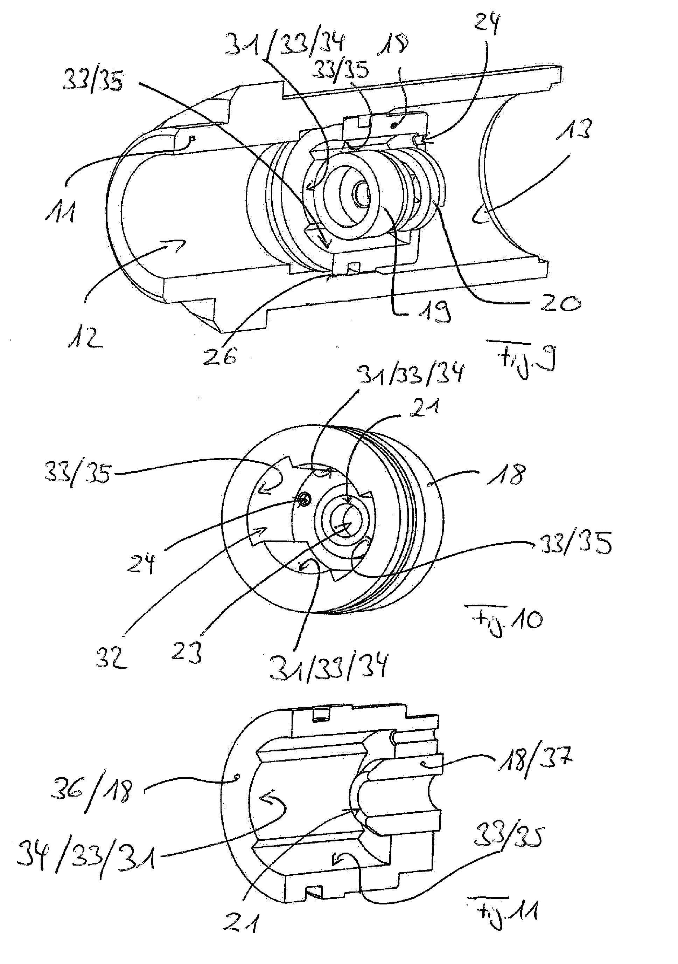

As shown in Figures 10 and 11, said valve body 18 provides said valve seat 21 for said valve plunger 19 surrounding the opening 23 and further at least one lateral bearing surface 31 for said valve plunger 19 guiding said valve plunger 19 when the same moves relative to the valve seat 21 depending on the spring force provided by the spring 20 and thermo element force provided by the thermo element 22.

Said valve body 18 has a central opening 32 surrounding said valve plunger 19, whereby said central opening 32 of said valve body 18 provides the or each lateral bearing surface 31 for said valve plunger 19.

As shown in Figure 10, an inner surface 33 of said central opening 32 of said valve body 18 provides at least one first surface section 34 having a relative small inner diameter for providing the or each lateral bearing surface 31 for said valve plunger 19 and at least one second surface section 35 having a large inner diameter allowing a flow of said liquid medium across said valve plunger 19 in the direction of the openings 23 and 24 of the valve body 18.

The number and/or shape of the second surface sections 35 depends on the desired flow rate of said liquid medium across the valve plunger 19 in the direction of the openings 23 and 24 of the valve body 18.

Said valve body 18 shown in Figure 10 is mode of one piece. An alternative valve body 18 shown in Figure 11 is made of an outer piece 36 providing the or each lateral bearing surface 31 for said valve plunger 19 and an inner piece 37 being moveable relative to the outer piece 36 providing said valve seat 21 for said valve plunger 19.

The valve body 18 provides a guiding function for the valve plunger 19 when the same moves relative to the valve seat 21 depending on the spring force provided by the spring 20 and thermo element force provided by the thermo element 22. So, the valve housing 11 does not need to provide such a guiding function which allows a simplified design of the valve housing 11. The valve body 18 is easy to manufacture.

The regulation valve 10 further comprises a shut off element 38 by which the flow of the liquid through the control valve 10 can be stopped. Said shut off element 38 is assigned to the outlet chamber 13 of the regulation valve 10.

The present invention provides a method for calibrating a regulation valve 10 comprising the following steps: positioning the regulation valve 10 to be calibrated in a bath 39 of a liquid medium having a defined calibration temperature in such a way that the thermo element 22 of the regulation valve 10 to be calibrated is positioned directly in said liquid medium of said bath 39; and providing a relative movement between said valve body 18 and said valve plunger 19 of the regulation valve 10 to be calibrated while the same in positioned in said bath 39 in such a way that the valve plunger 19 contacts the valve seat 21 of said valve body 18 so that the relative low or so-called minimum flow rate at relative high temperatures of the liquid medium is provided.

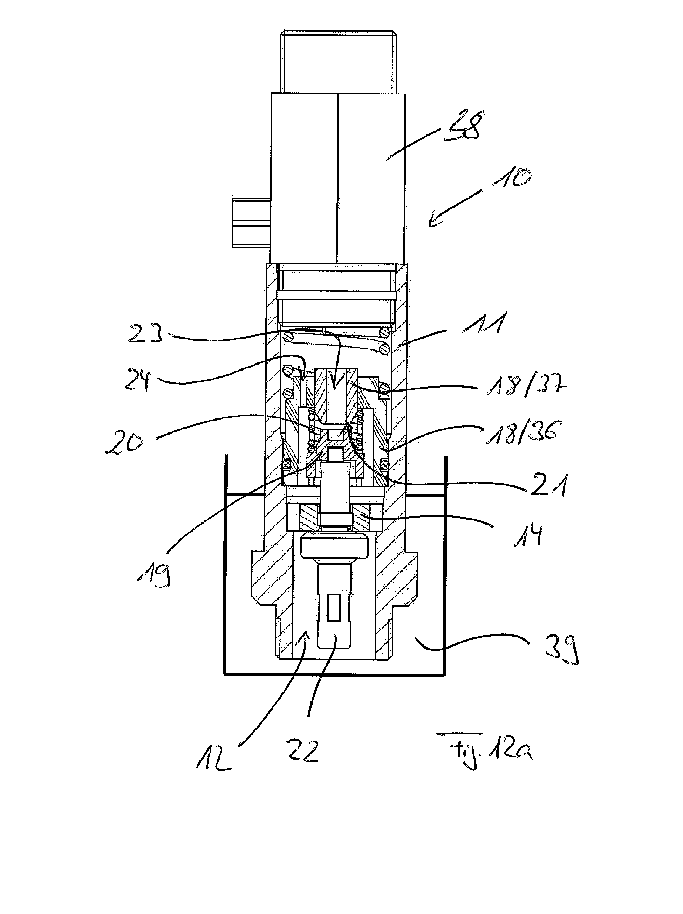

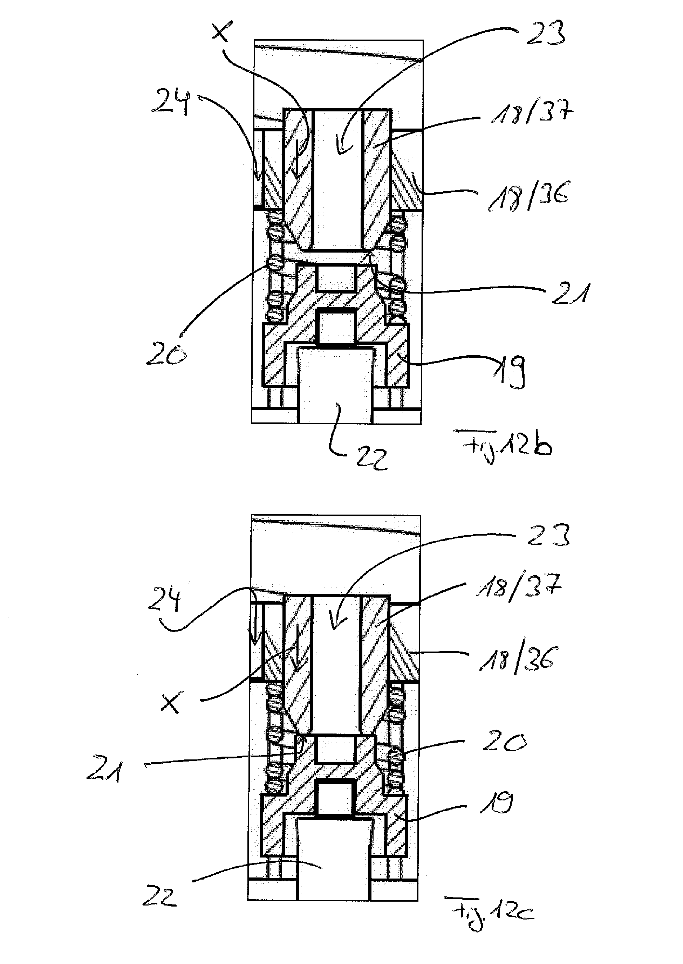

An embodiment of the calibration method for a regulation valve 10 comprising the valve body 18 according to Figure 11 is shown in Figures 12a to 12c. In this case, said inner piece 37 of said valve body 18 is moved in direction X relative to the outer piece 36 of the same and relative to the valve plunger 19 until the valve plunger 19 contacts the valve seat 21 provided by said inner piece 37 of said valve body 18 while the thermo element 22 in positioned directly in said bath 39.

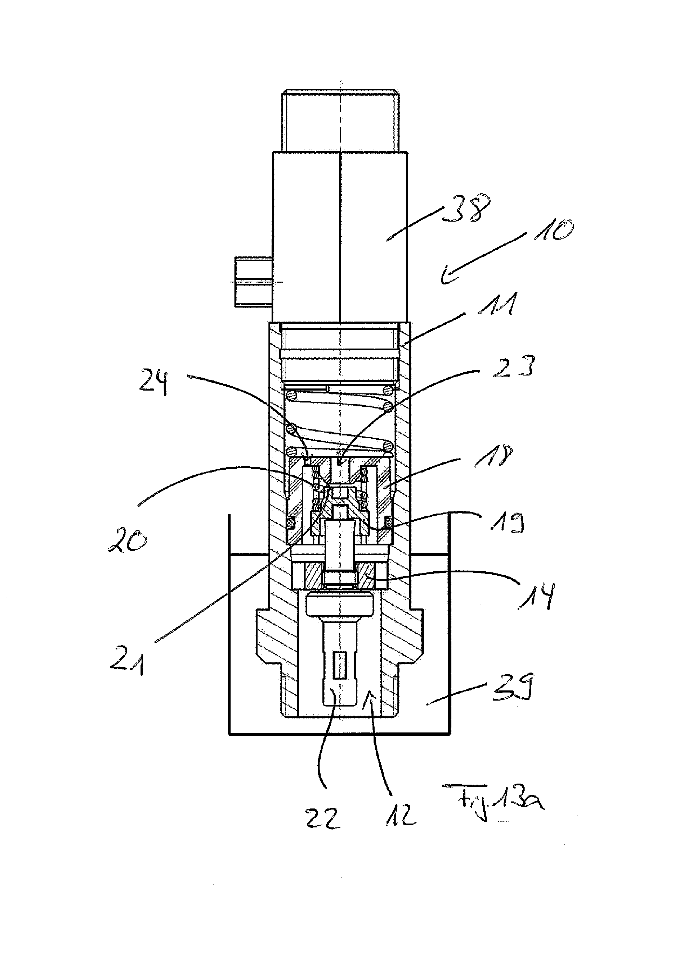

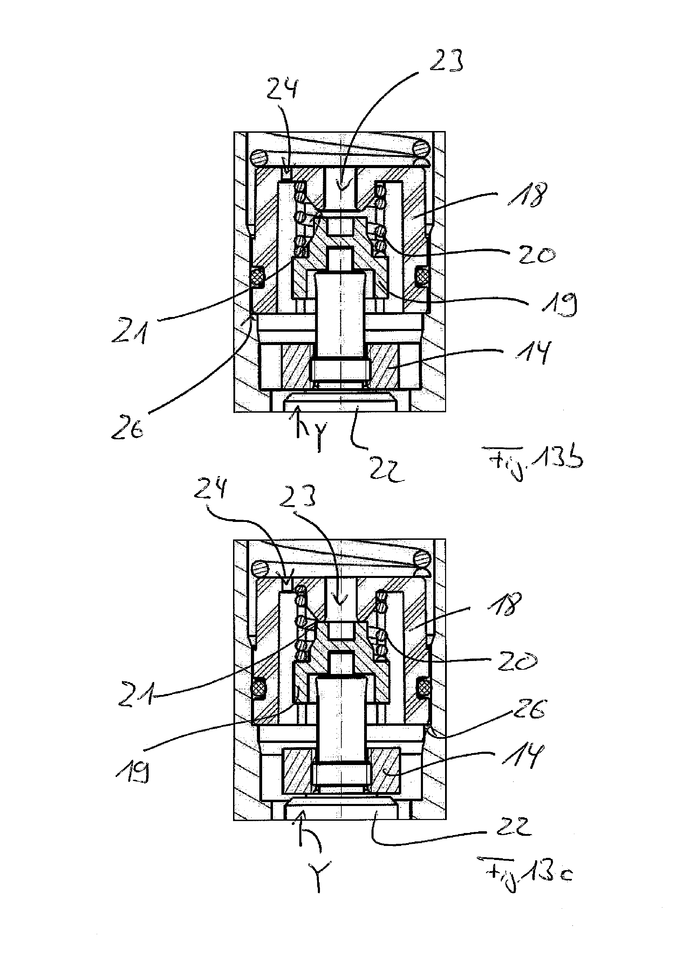

An alternative calibration method for a regulation valve 10 comprising the valve body 18 according to Figure 10 is shown in Figures 13a to 13c. In this case, said mounting support 14 carrying said thermo element 22 and through said thermo element 22 said valve plunger 19 is moved in direction Y relative to the valve body 18 until the valve plunger 19 contacts the valve seat 21.

Both alternatives of the calibration method provide a very simple and very accurate calibration of the relative low or so-called minimum flow rate of the regulation valve 10 at relative high temperatures of the liquid medium. The calibration method does not need special tools. The calibration method allows a fast calibration under nearly real operation conditions of the control valve 10. Influences or tolerances of the valve plunger 19, the or each relative small opening 24 in the valve body 18, the mounting support 14 and the housing 11 are removed.

The calibration temperature of the medium of the bath 39 corresponds preferably to the temperature at which the regulation valve 10 should provide the relative low or so-called minimum flow rate. It is also possible to use a lower calibration temperature and to adjust the relative position between said valve body 18 and said valve plunger 19 depending on the temperature difference between the calibration temperature and the temperature at which the regulation valve 10 should provide the relative low or so-called minimum flow rate.

### List of reference signs

- 10: regulation valve
- 11: valve housing
- 12: valve inlet chamber
- 12a, 12b: valve inlet sub-chamber
- 13: valve outlet chamber
- 14: mounting support
- 15: opening
- 16: opening
- 17: surface
- 18: valve body
- 19: valve plunger
- 20: first spring element
- 21: valve seat
- 22: thermo element
- 23: relative large opening within the valve body
- 24: relative small opening within the valve body
- 25: second spring element
- 26: stroke
- 27: first surface section
- 28: second surface section
- 29: jacket
- 30: opening within the valve plunger
- 31: lateral bearing surface
- 32: central opening
- 33: inner surface
- 34: first surface section
- 35: second surface section
- 36: outer piece
- 37: inner piece
- 38: shut off element
- 39: bath

## Claims

1. Method for calibrating a regulation valve for a liquid medium like water, especially for drinking water,
the regulation valve comprising:
a valve housing (11) providing a valve inlet chamber (12) and a valve outlet chamber (13);
a valve insert being positioned within said valve housing (11), said valve insert comprising a valve body (18), a valve plunger (19) and a first spring element (20) being positioned between the valve body (18) and the valve plunger (19), whereby said valve body (18) provides a valve seat (21) for said valve plunger (19) and whereby said first spring element (20) provides a first spring force which tends to lift up said valve plunger (19) from said valve seat (21);
a thermo element (22) being positioned directly in the flow of the liquid medium and carrying said valve plunger (19), said thermo element (22) provides a thermo element force acting on the valve plunger (19) depending on the temperature of the liquid medium within the valve housing (11), whereby said thermo element force provided by said thermo element (22) is acting against the first spring force provided by said first spring element and thereby tends to press said valve plunger (19) against said valve seat (21);
the calibrating method comprising the following steps:
positioning the regulation valve (10) to be calibrated in a bath (39) of a liquid medium having a defined calibration temperature in such a way that the thermo element (22) of the regulation valve (10) to be calibrated is positioned directly in said liquid medium of said bath;
providing a relative movement between said valve body (18) and said valveplunger (19) of the regulation valve (10) to be calibrated while the same in positioned in said bath in such a way that the valve plunger (19) contacts the valve seat (21) of said valve body (18).

2. Method as claimed in claim 1, **characterized in that**
the valve body (18) is made of an outer piece (36) providing at least one lateral bearing surface (31) for said valve plunger (19) and an inner piece (37) being moveable relative to the outer piece (36) providing said valve seat (21) for said valve plunger (19);
wherein said inner piece (37) of said valve body (18) is moved relative to said outer piece (36) of said valve body (18) and relative to the valve plunger (19) until the valve plunger (19) contacts the valve seat (21) provided by said inner piece (37) of said valve body (18).

3. Method as claimed in claim 1, **characterized in that**
the regulation valve comprises a mounting support (14) carrying said thermo element (22), whereby a subassembly comprising said mounting support (14), said thermo element (22) and said valve plunger (19) is mounted within an opening (15) of said valve housing (11) by a pressed connection between said mounting support (14) and said valve housing (11);
the valve body (18) is made of an outer piece (36) providing at least one lateral bearing surface (31) for said valve plunger (19) and an inner piece (37) being moveable relative to the outer piece (36) providing said valve seat (21) for said valve plunger (19),
said mounting support (14) carrying said thermo element (22) and through said thermo element (22) said valve plunger (19) is moved relative to the valve body (18) until the valve plunger (19) contacts the valve seat (21).

## Patentansprüche

1. Verfahren zum Kalibrieren eines Regelventils für ein flüssiges Medium wie Wasser, insbesondere für Trinkwasser,
wobei das Regelventil aufweist:
ein Ventilgehäuse (11), das eine Ventileinlasskammer (12) und eine Ventilauslasskammer (13) bereitstellt;
einen Ventileinsatz, der innerhalb des Ventilgehäuses (11) angeordnet ist, wobei der Ventileinsatz einen Ventilkörper (18), einen Ventilstößel (19) und ein erstes Federelement (20), das zwischen dem Ventilkörper (18) und dem Ventilstößel (19) angeordnet ist, aufweist, wobei der Ventilkörper (18) einen Ventilsitz (21) für den Ventilstößel (19) bereitstellt, und wobei das erste Federelement (20) eine erste Federkraft bereitstellt, die dazu tendiert, den Ventilstößel (19) von dem Ventilsitz (21) abzuheben;
ein Thermoelement (22), das direkt in dem Strom des flüssigen Mediums angeordnet ist und den Ventilstößel (19) trägt, wobei das Thermoelement (22) eine Thermoelementkraft bereitstellt, die in Abhängigkeit von der Temperatur des flüssigen Mediums innerhalb des Ventilgehäuses (11) auf den Ventilstößel (19) wirkt, wobei die durch das Thermoelement (22) bereitgestellte Thermoelementkraft gegen die durch das erste Federelement bereitgestellte erste Federkraft wirkt und dadurch dazu tendiert, den Ventilstößel (19) gegen den Ventilsitz (21) zu drücken;
wobei das Kalibrierverfahren folgende Schritte umfasst:
Anordnen des zu kalibrierenden Regelventils (10) in einem Bad (39) aus einem flüssigen Medium mit einer definierten Kalibriertemperatur auf eine derartige Weise, dass das Thermoelement (22) des zu kalibrierenden Regelventils (10) direkt in dem flüssigen Medium des Bades angeordnet ist;
Bereitstellen einer relativen Bewegung zwischen dem Ventilkörper (18) und dem Ventilstößel (19) des zu kalibrierenden Regelventils (10), während dasselbe in dem Bad angeordnet ist, auf eine derartige Weise, dass der Ventilstößel (19) den Ventilsitz (21) des Ventilkörpers (18) berührt.

2. Verfahren nach Anspruch 1, **dadurch gekennzeichnet, dass**
der Ventilkörper (18) aus einem äußeren Teil (36), das mindestens eine seitliche Auflageoberfläche (31) für den Ventilstößel (19) bereitstellt, und einem inneren Teil (37), das relativ zu dem äußeren Teil (36) beweglich ist und den Ventilsitz (21) für den Ventilstößel (19) bereitstellt, besteht;
wobei das innere Teil (37) des Ventilkörpers (18) relativ zu dem äußeren Teil (36) des Ventilkörpers (18) und relativ zu dem Ventilstößel (19) bewegt wird, bis der Ventilstößel (19) den Ventilsitz (21), der durch das innere Teil (37) des Ventilkörpers (18) bereitgestellt wird, berührt.

3. Verfahren nach Anspruch 1, **dadurch gekennzeichnet, dass**
das Regelventil einen Montageträger (14) aufweist, der das Thermoelement (22) trägt, wobei eine Unterbaugruppe, die den Montageträger (14), das Thermoelement (22) und den Ventilstößel (19) aufweist, innerhalb einer Öffnung (15) des Ventilgehäuses (11) durch eine Pressverbindung zwischen dem Montageträger (14) und dem Ventilgehäuse (11) angebracht ist;
der Ventilkörper (18) aus einem äußeren Teil (36), das mindestens eine seitliche Auflageoberfläche (31) für den Ventilstößel (19) bereitstellt, und einem inneren Teil (37), das relativ zu dem äußeren Teil (36) beweglich ist und den Ventilsitz (21) für den Ventilstößel (19) bereitstellt, besteht;
der Montageträger (14) das Thermoelement (22) trägt und durch das Thermoelement (22) der Ventilstößel (19) relativ zu dem Ventilkörper (18) bewegt wird, bis der Ventilstößel (19) den Ventilsitz (21) berührt.

## Revendications

1. Procédé d'étalonnage d'une soupape de régulation pour un milieu liquide tel que l'eau, en particulier pour de l'eau potable,
la soupape de régulation comprenant :
un boîtier de soupape (11) fournissant une chambre d'entrée de soupape (12) et une chambre de sortie de soupape (13) ;
un insert de soupape étant positionné à l'intérieur dudit boîtier de soupape (11), ledit insert de soupape comprenant un corps de soupape (18), un plongeur de soupape (19) et un premier élément ressort (20) positionné entre le corps de soupape (18) et le plongeur de soupape (19), ledit corps de soupape (18) fournissant ainsi un siège de soupape (21) pour ledit plongeur de soupape (19), et ledit premier élément ressort (20) produisant ainsi une première force de ressort qui a tendance à soulever ledit plongeur de soupape (19) dudit siège de soupape (21) ;
un thermo-élément (22) étant positionné directement dans l'écoulement du milieu liquide et supportant ledit plongeur de soupape (19), ledit thermo-élément (22) produisant une force de thermo-élément agissant sur le plongeur de soupape (19) dépendant de la température du milieu liquide à l'intérieur du boîtier de soupape (11), ladite force de thermo-élément produite par ledit thermo-élément (22) agissant ainsi à l'encontre de la première force de ressort produite par ledit premier élément ressort et ayant ainsi tendance à presser ledit plongeur de soupape (19) contre ledit siège de soupape (21) ;
le procédé d'étalonnage comprenant les étapes suivantes :
positionnement de la soupape de régulation (10) à étalonner dans un bain (39) d'un milieu liquide ayant une température d'étalonnage définie, de manière telle que le thermo-élément (22) de la soupape de régulation (10) à étalonner soit positionné directement dans ledit milieu liquide dudit bain ;
production d'un mouvement relatif entre ledit corps de soupape (18) et ledit plongeur de soupape (19) de la soupape de régulation (10) à étalonner tandis que celle-ci est positionnée dans ledit bain de manière telle que le plongeur de soupape (19) soit en contact avec le siège de soupape (21) dudit corps de soupape (18).

2. Procédé selon la revendication 1, **caractérisé en ce que**
le corps de soupape (18) est constitué d'une pièce extérieure (36) fournissant au moins une surface d'appui latérale (31) pour ledit plongeur de soupape (19) et une pièce intérieure (37) mobile par rapport à la pièce extérieure (36) fournissant ledit siège de soupape (21) pour ledit plongeur de soupape (19) ;
ladite pièce intérieure (37) dudit corps de soupape (18) étant déplacée par rapport à ladite pièce extérieure (36) dudit corps de soupape (18) et par rapport au plongeur de soupape (19) jusqu'à ce que le plongeur de soupape (19) soit en contact avec le siège de soupape (21) fourni par ladite pièce intérieure (37) dudit corps de soupape (18).

3. Procédé selon la revendication 1, **caractérisé en ce que**
la soupape de régulation comprend un support de montage (14) supportant ledit thermo-élément (22), un sous-ensemble comprenant ledit support de montage (14), ledit thermo-élément (22) et ledit plongeur de soupape (19) étant ainsi monté à l'intérieur d'une ouverture (15) dudit boîtier de soupape (11) par une connexion pressée entre ledit support de montage (14) et ledit boîtier de soupape (11) ;
le corps de soupape (18) étant constitué d'une pièce extérieure (36) fournissant au moins une surface d'appui latérale (31) pour ledit plongeur de soupape (19) et une pièce intérieure (37) mobile par rapport à la pièce extérieure (36) fournissant ledit siège de soupape (21) pour ledit plongeur de soupape (19),
ledit support de montage (14) supportant ledit thermo-élément (22) et, par le biais dudit thermo-élément (22), ledit plongeur de soupape (19) étant déplacé par rapport au corps de soupape (18) jusqu'à ce que le plongeur de soupape (19) soit en contact avec le siège de soupape (21).
